# EUROPEAN PATENT APPLICATION

(11) **EP 1 623 809 A1**
(43) Date of publication of application: **08.02.2006**
(21) Application number: 05016661.0
(22) Date of filing: 01.08.2005
(51) Int. Cl.: B29B 7/92, B27N 3/28, B29C 47/10, C08J 3/22, B29K 27/06

(54) **Coloured polymer-wood composite materials, a process for making and structural members obtained thereof**

(30) Priority: 03.08.2004 GB 0417275; 04.05.2005 GB 0509013
(71) Applicant: Deceuninck NV, 8830 Hooglede-Gits (BE)
(72) Inventor: Grymonprez, Wim, 8800 Roeselare (BE); Wallican, Luc, 8800 Roeselare (BE)
(74) Representative: Bird, William Edward

(57) **Abstract**

The invention involves using a masterbatch comprising one or more colouring agents, a thermoplastic polymer or copolymer and one or more liquid plasticizers for said thermoplastic polymer or copolymer, and optionally carbon black, for the manufacture of a coloured wood-polymer composite material based on said thermoplastic polymer or copolymer and on wood particles, said coloured wood-polymer composite material having a substantially uniform distribution of said colouring agents and/or an improved light stability.

## Description

### Field of the invention

This invention relates to coloured polymer-wood composite materials useful for making structural members, preferably for use in windows and doors for residential, industrial and commercial architecture. This invention also relates to a process for making such coloured polymer-wood composite materials, as well as to structural members obtained therefrom.

### Background of the invention

Wood, wood-polymer composites and metal components are commonly used in forming structural members, e.g. in conventional window and door manufacture. Commonly, residential windows are manufactured from milled wood products that are assembled with glass to form typically double hung or casement units. Wood windows while structurally sound, useful and well adapted for use in many residential installations, can deteriorate under certain circumstances, in particular weather conditions. Wood windows also require painting and other periodic maintenance. Wooden windows also suffer from cost problems related to the availability of suitable wood for construction. Clear wood products are slowly becoming more scarce and are becoming more expensive as demand increases. Metal components are often combined with glass and formed into single unit sliding windows. Metal windows typically suffer from substantial energy loss during the winter period.

In various areas of the world, various wood species remain highly appreciated and used for the construction of buildings or parts of buildings exposed to ambient atmosphere moisture, to precipitation and/or climatic variations of all kinds, namely to the effects of sun radiation. A lasting protection against these natural building-wood deterioration factors therefore constitutes a first scale economic goal. In particular, the cost of maintenance and/or restoration of natural wood or wood-polymer composites mainly consists of manpower costs, and it is therefore important that maintenance may be spaced over a longer period of time. Therefore there is a need for a process of making wood-polymer composite materials, the result of which lasts sufficiently long so that a maintenance treatment may be repeated only at very much spaced intervals of time.

Extruded thermoplastic materials have been used in window and door manufacture. Filled and unfilled thermoplastic polymers have been extruded into useful seals, trim, coatings and other window construction components. Thermoplastic materials such as polyvinyl chloride have also been combined with wood members in manufacturing windows, e.g. in plastic coatings or envelopes on wooden or other structural members. Generally, the cladding or coating technology used in making such windows involves extruding a thin polyvinyl chloride coating or envelope surrounding a wooden structural member. Polyvinyl chloride has been combined with wood to make extruded materials. However, such materials cannot always successfully be used in the form of a structural member for the direct replacement of wood. Common wood-thermoplastic polymer composite materials are usually not able to provide thermal and structural properties similar to those of wood. When extruded, these materials fail to have sufficient modulus, compressive strength and thermal expansion coefficient in order to match wood as a direct replacement material. Furthermore, many extruded composites must be milled after extrusion to yield a final useful shape. Typical commodity thermoplastic polymers achieve a modulus no greater than about 3,400 MPa. Most commonly, polyvinyl chloride, polystyrene and polyethylene have been used in such products. EP-B-1,100,675 describes (table II) a foamed polymer composite building material made from a rigid PVC compound, hardwood flour, an acrylic modifier, a chemical blowing agent and 0.1 % by weight carbon black.

In addition to the above-mentioned problems, a growing trend appears in the aesthetics of modern architecture for using coloured wood-appearing structural elements with a large variety of different colours. This requirement brings additional constraints to the design and manufacture of wood-polymer composite materials in terms of colour stability under various weather and ageing conditions, namely the influence of ultraviolet light and visible light, and in terms of possible migration of the colouring agent throughout said wood-polymer composite materials. In particular, the colour of coloured wood-polymer composite materials becomes lighter after exposure to ultraviolet light and/or visible light during a certain period of time. This phenomenon may depend upon the relevant colouring agent(s) being used but may, in extreme circumstances and when said colouring agent(s) are other than blackening agents (e.g. carbon black), result in a significant whitening (sometimes a very strong whitening, and even a complete whitening) of the coloured wood-polymer composite material after a certain period of time. The kinetics of this phenomenon may also depend upon other parameters such as humidity and temperature but in all cases therefore appears as commercially unacceptable. Without wishing to be bound by theory, it seems that discoloration of the coloured wood-polymer composite material occurs at least at two different levels. First, colour radicals present in the lignin components of wood quickly degrade and react with polyvinyl chloride, thus causing further degradation of polyvinyl chloride. Secondly, colour radicals when absorbing ultraviolet light show an auto-catalytic destructive effect and in this way cause withdrawal of free chlorine radicals which in turn cause whitening of the coloured wood-polymer composite material. In addition, such free chlorine radicals may also be produced during the co-extrusion process for making the wood-polymer composite material. Finally, the presence of water seems to produce an acceleration of the whitening process.

Because the handling of colouring agents is likely to cause environmental problems, there is a also a need in the art for an environment friendly process of making coloured wood-polymer composite materials. It is also desirable that coloured wood-polymer composite materials be further protected against the most various biologic degradation factors such as various species of insects and mushrooms. Another need to be met in this technical field is the absence of lasting and/or significant modifications of the major mechanical properties (such as, but not limited to, E-modulus, impact resistance at low temperature, and elongation at break) and of the dimensional stability of the wood-polymer composite material.

Accordingly, a substantial need exists for a coloured wood-polymer composite material that can be made with minimal changes to the method of manufacture, in particular extrusion, with respect to the corresponding non-coloured wood-polymer composite materials. A further need exists for a coloured wood-polymer composite material that can resist colour changes over time or at least that has a colour change kinetics significantly slower than that of existing composite materials whatever the relevant colour, for instance so as to avoid a significant whitening of the composite material over time. A further need exists for a coloured wood-polymer composite material that shows a substantially uniform distribution of the colouring agent throughout the material, or at least a colouring agent distribution significantly more uniform than that of existing composite materials whatever the relevant colour. These various needs require the development of a reliable method for incorporating a colouring agent into a wood-polymer composite material in such a way that any change in colour after prolonged exposure to ultraviolet light and/or visible light will be minimal and, preferably, in such a way that the colouring agent distribution throughout said wood-polymer composite material is substantially uniform or at least significantly more uniform than achieved by existing manufacturing processes.

British Patent No. 668,780 describes forming tiles, e.g. by calendering or rolling, from sheets of a material obtained by dry mixing a fibrous material (e.g. saw-dust) with a mineral material (stone dust) in a pulverising machine wherein the individual fibrous particles are coated with said stone dust and, with or without pigments or plasticizers, mixed with an asphaltic or resinous binder. The latter resin is not defined and proportions of the three main components (saw-dust, stone dust, and resinous binder) of the mix are not specified.

U.S. Patent No. 4,594,372 describes a polyvinyl chloride composition containing stabilizers, plasticizers, lubricants and wood meal (particle size ranging from 5 to 1000 microns), being improved by adding a novolak phenol formaldehyde resin hardened by formalin in the presence of a metallic agent (calcium oxide, calcium hydroxide or magnesium oxide). A particular embodiment relates to a composition containing, per 100 parts by weight polyvinyl chloride, 0.5 to 5 parts by weight of a colouring agent. According to the manufacturing process described in the representative examples, polyvinyl chloride is combined with the remaining ingredients in a two-stage mixer at 120 °C for 10 minutes together with the activated wood meal (prepared in a previous step by combining it with phenol formaldehyde resin in the presence of calcium oxide and formalin, i.e. said process does not provide the separate preparation of a coloured PVC master-batch.

Japanese Patent Publications No. 58/072948 and 80/048788 describe mixing a pigment and a vinyl chloride polymer resin, and optionally other components, however there is no mention of wood in these documents. Japanese Patent Publication No. 59/081353 describes colouring an organic reinforcing material (e.g. wood meal) to have the same colour as that of a colorant in injection-moulding a polyolefin resin containing said colorant and said organic reinforcing material. However this document does not mention PVC or extrusion or a plasticizer, and the colorant is pre-mixed with the wood meal, not the polyolefin resin.

The manufacturing of wood-like products from a resin, a pigment or colourant and a cellulose material wherein stripe shaped coloured portions are formed is also known in the art, e.g. from EP-A-655,310 and U.S. Patent No. 5,869,138. Such manufacturing methods however tend in the opposite direction to the problems of the present invention.

### Summary of the invention

The present invention is based on a first unexpected finding that a uniform distribution of one or more colouring agents in a wood-polymer composite material based on a thermoplastic polymer or copolymer and on particles of a porous material derived from cellulose and/or lignin such as but not limited to wood, in particular for outdoor applications, can be advantageously achieved by using one or more plasticizers of said thermoplastic polymer or copolymer as a vehicle or carrier for said one or more colouring agents, especially in the form of a coloured masterbatch. Such uniform introduction of one or more colouring agent(s) into a wood-polymer composite material may be performed with minimal changes to the process for making the wood-composite material and structural members therefrom and without adverse effects on the balance of properties of the resulting material.

The present invention is based on a second unexpected finding that the colour stability of a coloured wood-polymer composite material under various weather and ageing conditions, when the colour imparted to said coloured material is other than black, is significantly improved by introducing a suitable amount of a carbon black into the coloured wood-composite material formulation. More specifically, a light-stabilized coloured polymer-wood composite material useful for making structural members is obtained, according to the present invention, by providing a mixture of (i) one or more colouring agents other than a black pigment or dye and (ii) a carbon black in suitable proportions into the formulation of polymer and wood particles (e.g. wood sawdust). The light-stabilized coloured polymer-wood composite material of this invention may be easily produced by various methods, e.g. an extrusion process, including the combination of a master-batch including said one or more colouring agents other than a black pigment or dye and/or a master-batch including said carbon black, together with the remaining material components.

### Detailed description of the invention

In a first aspect, the present invention relates to a process for making a wood-polymer composite material, comprising a step of drying wood particles until the water content of said wood particles is below about 8 % by weight, and a step of combining said dried wood particles and a masterbatch comprising said thermoplastic polymer or copolymer and one or more additives, said process being characterised in that the masterbatch used in said combination step comprises one or more colouring agents and one or more liquid plasticizers for said thermoplastic polymer or copolymer, said one or more liquid plasticizers being able to dissolve or disperse said one or more colouring agents and to be at least partially absorbed by said dried wood particles, the proportions of said thermoplastic polymer or copolymer and of said masterbatch comprising said one or more liquid plasticizers and said one or more colouring agents being such that upon combination of said dried wood particles, said thermoplastic polymer or copolymer and said masterbatch, a coloured wood-polymer composite material with substantially uniform distribution of said one or more colouring agents is obtained.

Thus, the combination step proceeds either by directly combining dried wood particles and a three-components masterbatch including the thermoplastic polymer or copolymer, the one or more colouring agents and the one or more liquid plasticizers for said thermoplastic polymer or copolymer, or in two sub-steps of (a) first preparing a two-components masterbatch comprising one or more colouring agents and one or more liquid plasticizers for a thermoplastic polymer or copolymer, and then (b) combining said two-components masterbatch, dried wood particles and said thermoplastic polymer or copolymer.

Each of the main operating parameters of the process of the invention will now be described in more details but without limiting intention.

In a first step, wood particles are dried until the water content of said wood particles is below about 8 % by weight, preferably below 1 % by weight, more preferably below 0.1 % by weight, most preferably below 0.05% by weight. This means a significant level of drying is required since, depending upon factors such as relative humidity and season, trees typically have a water content between about 10 % and 30 % by weight. Drying in this first step of the process of the invention may be effected by any means known in the art, i.e. with or without the application of vacuum, and using standard drying equipment known to the skilled person.

The preferred thermoplastic polymer or copolymer used in the process for making a coloured wood-polymer composite material according to this invention comprises polyvinyl chloride. Polyvinyl chloride is typically manufactured by the free radical polymerization of vinyl chloride resulting in a useful thermoplastic polymer. After polymerization, polyvinyl chloride is commonly combined with one or more additives such as but not limited to thermal stabilizers, lubricants, plasticizers, fillers, biocides, processing aids, flame retardants and the like. Vinyl chloride can also be combined with one or more other vinyl monomers in the manufacture of vinyl chloride copolymers. Such copolymers may be linear, branched, graft, random copolymers or block copolymers. Vinyl monomers that can be combined with vinyl chloride to form such vinyl chloride copolymers include acrylonitrile, α-olefins such as ethylene, propylene or 1-butene, chlorinated monomers such as vinylidene dichloride, acrylic monomers such as acrylic acid, methyl acrylate, ethyl acrylate, methyl methacrylate, acrylamide, hydroxyethyl acrylate and the like, styrenic monomers such as styrene, α-methyl styrene, vinyl toluene and the like, and vinyl acetate. Such monomers may be used in an amount of up to about 50 % by moles, the balance being vinyl chloride. Polymer blends or polymer alloys can also be useful in manufacturing the coloured wood-polymer composites of the invention. Such alloys typically comprise two or more miscible polymers or copolymers suitably blended to form a substantially uniform composition. A polymer alloy at equilibrium preferably comprises a mixture of two or more amorphous polymers existing as a single phase of intimately mixed segments of the two macromolecular components and exhibit a single, composition-dependent, glass transition temperature (Tg). Polyvinyl chloride forms a number of known polymer alloys that may also be used in the practice of this invention such as but not limited polyvinyl chloride / nitrile rubber, polyvinyl chloride / vinylidene dichloride copolymers, poly(vinyl chloride-co-α-methyl styrene-co-acrylonitrile copolymers, polyvinyl chloride / polyethylene blends and others.

The primary requirement for the substantially thermoplastic polymeric material to be used herein is that it retains sufficient thermoplastic properties to be able of melt blending with cellulose and/or lignin containing particles such as but not limited to wood particles, and that the resulting melt blend material can be extruded or injection-moulded in a process for forming a rigid structural member. Polyvinyl chloride polymers, copolymers and polymer alloys are commercially available in a wide variety of grades from a number of manufacturers. Preferred polyvinyl chloride materials are polyvinyl chloride polymers with a number average molecular weight Mₙ from about 50,000 to about 150,000, and even more preferably from 80,000 to 100,000.

The polyvinyl chloride material may optionally be modified by the introduction pending groups being able to form hydrogen bonds with the cellulosic hydroxyl groups of wood. As is well known to those skilled in the art, cellulose molecules contain secondary and/or primary hydroxyl groups that are available for hydrogen bonding. Said pending groups may be introduced by copolymerization of vinyl chloride with a second monomer having functional groups that are capable of forming hydrogen bonds with cellulose. The polyvinyl chloride polymer material may be modified either by grafting a reactive cellulose-compatible moiety onto the polyvinyl chloride backbone or by incorporating it, e.g. by copolymerization techniques, into the polymer backbone itself. Representative examples of monomers that can be included as one or more minor components (the total amounts of which should be less than 50 % by moles with respect to the whole copolymer) in a polyvinyl chloride copolymer include vinyl alcohol, maleic anhydride, glycidyl methacrylate, vinyl oxazolines, vinyl pyrrolidones, vinyl lactones and the like. Such comonomers, especially when present at the preferred concentrations of less than about 10 % by moles, more preferably less than about 5 % by moles, react in a covalent manner with the hydroxyl groups of cellulose and/or lignin and form associative bonds therewith, resulting in increased compatibility, but are not sufficiently reacted with vinyl chloride to result in a crosslinkable or crosslinked material. The polyvinyl chloride polymer material can be grafted with a variety of reactive compounds preferably having a primary or secondary nitrogen, an oxygen atom, or a carboxyl group such as, but not limited to, N-vinyl pyrrolidone, N-vinyl pyridine, N-vinyl pyrimidine, polyvinyl alcohol polymers, unsaturated fatty acids, acrylic acid, methacrylic acid, reactive acrylic oligomers, reactive amines, reactive amides and others. Any reactive or grafting species containing a hydrogen bonding atom is suitable as a graft reagent for this embodiment of the invention.

The thermoplastic, e.g. polyvinyl chloride, material may also optionally be modified by including or blending with one or more additives imparting certain desirable characteristics, for instance one or more impact modifiers, e.g. an impact modifier based on one or more acrylic monomers, with the purpose of improving the impact strength of the thermoplastic material. Suitable impact modifiers of this type, as well as the amount to be included into the thermoplastic material, are well known in the art. Examples thereof include polymers and copolymers of acrylic monomers such as acrylic and methacrylic acid, acrylic and methacrylic esters, acrylic and methacrylic amides and alkaline salts thereof, in particular poly-methylmethacrylate, block copolymers of acrylates and other ethylenically mono-unsaturated or polyunsaturated monomers such as but not limited to styrene, butadiene and the like. An impact-modifying amount of such polymers is usually within a range from about 1 % to 15 % by weight, preferably from about 1 % to about 8 % by weight, of the polyvinyl chloride thermoplastic material.

The one or more plasticizers for the thermoplastic polymer or copolymer is a critical requirement of this invention and may for instance be suitably selected from the group consisting of dialkyl phthalates, e.g. wherein each alkyl group may independently have from 4 to 18 carbon atoms and may be straight or branched. Preferably each alkyl group may be n-butyl, isobutyl, n-hexyl, n-octyl, n-decyl and the like, more preferably both alkyl groups are identical. More specific examples of such dialkyl phthalate plasticizers include, but are not limited to, dibutylphtalate, dioctylphtalate and mixtures thereof in various proportions. In order to meet the invention's requirement for the liquid plasticizer of the thermoplastic polymer or copolymer to dissolve or disperse the one or more colouring agents and to be at least partially absorbed by dried wood particles, the amount of said one or more liquid plasticizers is preferably from about 1.5 % to about 5 % by weight, more preferably from about 2 % to about 4 % by weight, of the amount of said thermoplastic polymer or copolymer. As long as said one or more liquid plasticizers represent no more than about 5 % by weight of said thermoplastic polymer or copolymer, there is no significant loss of mechanical properties (such as, but not limited to, E-modulus, impact resistance at low temperature, and elongation at break) for the wood-composite polymer material resulting from combining the masterbatch of this invention with dried wood particles. Also the weight ratio, within the masterbatch of the invention (and, therefore, within the coloured wood-composite material), of the one or more colouring agents to the one or more liquid plasticizers of said thermoplastic polymer or copolymer is preferably from about 0.2 :1 to about 4 :1, more preferably from about 0.4 :1 to about 2.5 :1, most preferably from about 0.6 :1 to about 1.5 :1.

The one or more colouring agent is a critical requirement of this invention and may be suitably selected from the group consisting of inorganic pigments and organic dyes. Preferably for outdoor applications, the latter should be selected in order to exhibit a substantial UV-light stability. Suitable inorganic pigments may suitably be selected from the group consisting of metallic compounds, wherein the term " metallic compound " refers to a compound of a metal ion and one or more atoms or groups of atoms, e.g. in the form of ionic bonds and/or ionic complexes. Such metallic compounds may be selected from a very wide range of species. In particular, it may be selected from the group consisting of metal oxides, metal hydroxides, metal sulfides, metal selenides, metal tellurides and combinations thereof in various proportions, wherein the metal may belong to any of groups 1 to 15 of the Periodic Table. Suitable examples include, but are not limited to, zinc oxide, zinc hydroxide, calcium hydroxide, iron oxide, aluminium oxide, titanium dioxide, magnesium oxide, manganese oxide, zirconium oxide, nickel hydroxide, vanadium oxide, silver vanadium oxide and the like, including various crystallographic forms thereof (for instance, iron oxide may be present either in its spherical red form or in its prismatic yellow form).

The metallic compound to be used as a pigment or colouring agent in this invention may also be selected from metal organic or inorganic salts or metal complex salts. Suitable examples include, but are not limited to, carbonates, percarbonates, perthiocarbonates, perdicarbonates, perphosphates, perdiphosphates, pergermanates, rhenates, perrhenates, ruthenates, perruthenates, tantalates, pertantalates, technetates, pertechnetates, sulfates, thiosulfates, thiotellurates, sulfites, sulfonates, persulfates, carbides, hydrides, borates, perborates, borohydrides, borosilicates, borotitanates, borotungstates, perchromates, silicates, aluminates, nitrates, nitrites, perazotates, arsenites, arseniates, perarseniates, bromates, bromites, iodates, periodates, iodites, periodohexatungstates, manganates, permanganates, molybdates, permolybdates, perthio-molybdates, vanadates, perthiovanadates, titanates, pertitanates, zirconates, chromates, ferrates, ferricyanates, ferrioxalates, ferrocyanates, ferrofulminates, cobaltocyanates, nickelates, nickelotungstates, platinates, uranates, peruranates, perosmiates, chlorates, perchlorates and chlorites of one or more metals of any of groups 1 to 15 of the Periodic Table. Suitable examples of such inorganic salts include, but are not limited to, calcium carbonate, calcium sulfate, molybdenum carbide, tungsten carbide, ferric chromate (yellow), ferric ferrocyanate (blue) and the like. The skilled person knows which metal oxide or metal salt, or which combination of such oxides and salts, should be selected in order to achieve a desired target colour.

Suitable organic dyes for the practice of this invention include, but are not limited to, phtalocyanines and anthraquinone dyes such as alizarines (e.g. alizarin red, alizarin cyanin green, alizarin blue, alizarin orange, acid alizarin violet N) and purpurin, quinoinic dyes such as substituted naphthoquinones, phenoxazines and phenothiazines, carotinoid dyes, chalcone dyes, Victoria blue B, Victoria blue R, indigoid dyes such as indigo blue, indigocarmine and thioindigo, nitro and nitroso dyes such as naphthol green N and naphthol yellow S ; diphenylmethane and triphenylmethane dyes, methine dyes, monoazo dyes and diazo dyes, Acid blue, Acid green, Acid orange, Acid red, Acid violet and Acid yellow. With respect to composite materials intended for outdoor applications, organic dyes are more preferably restricted to those which can withstand ultraviolet (UV) light for a long period of time.

Suitable amounts of the one or more colouring agents are well known to those skilled in the art and mainly depend upon the selected inorganic pigment or organic dye, the desired intensity of colour and upon the aesthetic effect to be provided. Conventionally, such amounts range from about 0.1 % to 5 % by weight, preferably 0.5 to 3 % by weight, of the wood-polymer composite material.

The size of wood particles to be used in the process of the invention is not a critical parameter, provided that it is suitable for hot extrusion under standard conditions. Usually, such wood particles are selected from the group consisting of wood dust with an average particle size from about 25 µm to 250 µm, wood flower with an average particle size from 250 µm to 750 µm, and wood chips with an average particle size from 750 µm to about 2.0 mm.

In a particular embodiment of the invention, especially when the one or more colouring agents include an organic dye cannot withstand ultraviolet (UV) light for a sufficient period of time or when the coloured wood-polymer composite material of this invention is intended for outdoor exposure in an area with excessive UV light intensity throughout the day, the masterbatch may further optionally comprise one or more UV light stabilizers. The latter may be selected according to the knowledge of the skilled person and should be incorporated into the masterbatch in the usual amounts for such additives.

In another particular embodiment of the invention, the masterbatch may further optionally comprise one or more biocides, e.g. one or more anti-fungal agents, bacteriocides, anti-microbial agents and the like. The latter may be suitably selected depending upon parameters such as their compatibility with the other masterbatch components, temperature stability, environmentally acceptable degradation and the like. Suitable examples thereof include, but are not limited to, isothiazolinones (e.g. 2-methyl-4,5-trimethyleneisothiazolin-3-one), dithio-2,2'-bis(benzmethyl-amide, organobromine and organoiodine compounds, thiocyanates, dithiocarbamates, formaldehyde-release agents and mercuric compounds.

In another particular embodiment of the process of the invention, combination of the dried wood particles and the coloured masterbatch may be effected by means of extrusion at an elevated temperature between about 160°C and 240°C, preferably between about 170°C and 220°C, more preferably between about 175°C and 210°C. Preferably, the one or more colouring agents should be selected so that they are not subject to deterioration during extrusion at said elevated temperatures.

In another particular embodiment of the process of the invention, dried wood particles represent from about 30 to 60 % by weight, preferably from 35 to 50 % by weight, of the wood-polymer combination being processed, whereas the thermoplastic polymer represents from about 40 to 70 % by weight, preferably from 50 to 65 % by weight, of said wood-polymer combination.

In a second aspect, the present invention relates to a coloured wood-polymer composite material comprising wood particles, at least one thermoplastic polymer or copolymer and one or more colouring agents and one or more liquid plasticizers for said thermoplastic polymer or copolymer, said one or more liquid plasticizers being able to dissolve or disperse said one or more colouring agents and to be at least partially absorbed by said wood particles, the proportions of said thermoplastic polymer or copolymer, said one or more liquid plasticizers and said one or more colouring agents being such that said coloured wood-polymer composite material exhibits a substantially uniform distribution of said one or more colouring agents. Such a coloured wood-polymer composite material made by a process such as described hereinabove, including all variants for each component thereof, and including all optional embodiments of the foregoing.

In a third aspect, the present invention relates to a masterbatch for making a coloured wood-polymer composite material based on a thermoplastic polymer or copolymer and on wood particles, said masterbatch comprising one or more colouring agents, characterized in that said masterbatch further comprises one or more liquid plasticizers for said thermoplastic polymer or copolymer, said one or more liquid plasticizers being able to dissolve or disperse said one or more colouring agents and to be at least partially absorbed by said wood particles.

In a specific embodiment, the masterbatch of the invention may further comprise a thermoplastic polymer or copolymer, the proportions of said thermoplastic polymer or copolymer, said one or more liquid plasticizers and said one or more colouring agents in said masterbatch being selected such that, upon combination of wood particles and said masterbatch, a coloured wood-polymer composite material with substantially uniform distribution of said one or more colouring agents is obtained. The type of distribution of the colouring agents in the final material may be qualitatively controlled visually and may also be quantatively be ascertained by analytical techniques known in the art such as, but not limited to, image analysis.

Finally, the invention relates to the use of a masterbatch comprising one or more colouring agents, a thermoplastic polymer or copolymer and one or more liquid plasticizers for said thermoplastic polymer or copolymer, said one or more liquid plasticizers being preferably able to dissolve or disperse said one or more colouring agents and to be at least partially absorbed by wood particles, for the manufacture of a wood-polymer composite material based on said thermoplastic polymer or copolymer and on wood particles. Advantageously such use permits the production or obtention of a wood-polymer composite material with a substantially uniform distribution of said one or more colouring agents without a need for substantially modifying the technology of production thereof.

In another aspect, the present invention relates to a light-stabilized coloured wood-polymer composite material comprising :
(A) a cellulose and/or lignin based component,
(B)a polymer phase consisting of one or more thermoplastic polymers or copolymers, and
(C) one or more colouring agents other than a black pigment or dye,

characterised in that said coloured wood-polymer composite material further comprises (D) carbon black in respective proportions such as to provide light stabilisation of said coloured wood-polymer composite material. Preferably the light-stabilized coloured wood-polymer composite material of this invention is not foamed.

The term " light stabilisation ", as used herein, does not strictly refer to the colour being constant but refers to a change in colour which is minimal or at least significantly lower than the change in colour obtained, for the same colour and under the same wheathering or ageing conditions, in the absence of carbon black (D). Light stability or colour change of the coloured wood-polymer composite material may be expessed for instance by one or more of the following parameters :
- a change in the yellowness index, for instance as measured according to norm EN 513-1,
- a change δE in the colour parameter E, for instance as measured according to standard ISO 7724.

In a preferred embodiment, the present invention relates to a light-stabilized coloured wood-polymer composite material having the above composition and wherein δE, measured according to standard ISO 7724, is below 6.0. In a more preferred embodiment, the present invention relates to a light-stabilized coloured wood-polymer composite material having the above composition and wherein δE, measured according to standard ISO 7724, is below 4.0. In a most preferred embodiment, the present invention relates to a light-stabilized coloured wood-polymer composite material having the above composition and wherein δE, measured according to standard ISO 7724, is below 2.0. The level of light stabilisation achieved, in particular the value achieved for δE mainly depends, for each particular colouring agent or combination of colouring agents other than a black pigment or dye, upon the respective proportions of components (C) and (D), i.e. on the weight ratio (C)/(D). It will be taken into account that the level of light stabilisation achieved is not necessarily proportional to the carbon black proportion over the whole range of proportions (for instance light stabilisation may reach an optimum at a certain carbon black proportion), and that the amount of carbon black (D) incorporated into the wood-polymer composite material of the invention should not be so high that the initial colour is darkened excessively. For most colouring agents, the desirable weight ratio (C)/(D) is from 0.2 :1 to 10 :1, preferably from 0.5 :1 to 4 :1, more preferably from 1:1 to 3 :1, and may be adapted for each particular colouring agent or combination of colouring agents other than a black pigment or dye in view of the desired light stabilisation and in view of the initial darkening effect that is tolerated.

Weight proportions of the colouring agents (C) and carbon black (D) in the wood-polymer composite material of the invention may be expressed with respect to the weight of the light-stabilized coloured composite material or with respect to the sum of weights of components (A) and (B). Because the latter constitute by far the major part of the light-stabilized coloured composite material, as will be seen from the following usual ranges (i.e. the cumulative weight proportion of (C) and (D) does not exceed about 8%), these alternative expressions do not significantly differ in practice. Suitable amounts of the one or more colouring agents (C) are well known to those skilled in the art and mainly depend upon the intensity of colour desired and upon the aesthetic effect to be provided. Conventionally, such amounts range from about 0.1 % to 5 % by weight, preferably from 0.5 to 3 % by weight, more preferably from 0.8 to 2 % by weight, of the light-stabilized coloured wood-polymer composite material of the invention. A suitable amount of the carbon black (D) depends, among others, on :
- the ability of the colouring agents (C) to be degraded by exposure to light, in particular ultraviolet light,
- the more or less pronounced colour intensity provided by said colouring agents (C), and
- the level, in particular the duration, of colour protection against light, in particular ultraviolet light, that is desired.

Useful amounts of carbon black (D) range from about 0.15 % to about 2.5 % by weight, preferably from 0.25 to about 2 % by weight, more preferably from about 0.5 to about 1.5 % by weight, most preferably from about 0.8 to about 1.2 % by weight, of the light-stabilized coloured wood-polymer composite material of the invention.

A critical feature of the polymer phase (B) in this aspect of the invention is to be essentially thermoplastic, i.e. free from thermosetting polymers and from chemicals being able to form a thermosetting polymer *in situ.* The preferred thermoplastic polymer or copolymer used in the polymer phase (B) is a thermoplastic polymer or copolymer, e.g. a polyvinyl chloride material as described above with respect to the first aspect of the present invention. The one or more colouring agents (C) in this aspect of the invention are colouring agents as described above with respect to the first aspect of the present invention.

Carbon black (D) is a critical component of the light-stabilized coloured wood-composite material of this aspect of the invention. Carbon black is preferably used in the form of a powder having an average particle size from about 10 nm to about 100 nm, i.e. significantly smaller, preferably at least about 100 times smaller than the average particle size of the one or more colouring agents (C).

The cellulose and/or lignin based component (A) is also a critical component of the light-stabilized coloured wood-composite material of this aspect of the invention. Wood is the most common example of such a component (A) and may be as described above with respect to the first aspect of the present invention..

This aspect of the invention may advantageously be combined with the first aspect of the present invention, i.e. the light-stabilized coloured wood-polymer composite material including carbon black may further comprise one or more liquid plasticizers for the one or more thermoplastic polymers or copolymers of the polymer phase (B), such as described above with respect to the first aspect of the present invention. Said one or more liquid plasticizers for the thermoplastic polymer or copolymer are preferably present in the light-stabilized coloured wood-polymer composite material in the same amount as required in the first aspect of the invention, so that they will perform the same function of contributing to uniform distribution of the one or more colouring agents throughout the light-stabilized wood-polymer composite material.

In yet another aspect the present invention relates to methods and processes for making a light-stabilized coloured wood-polymer composite material, said methods having in common combining, in one or more steps :
(A) a cellulose and/or lignin based component,
(B)a polymer phase consisting of one or more thermoplastic polymers or copolymers,
(C)one or more colouring agents other than a black pigment or dye, and
(D)carbon black,

said one or more colouring agents (C) and said carbon black (D) being combined in respective proportions such as to provide light stabilization of said coloured wood-polymer composite material.

In view of making structural members, preferably for use in building applications such as, but not limited to, decking, sidings, windows, doors and others for residential, industrial and commercial architecture, said methods also preferably have in common a preliminary step of drying the cellulose and/or lignin based component (A), e.g. wood particles, in the same manner and to the same extent as required in the first aspect of this invention.

The combination of the four critical ingredients of the light-stabilized coloured wood-polymer composite material of this aspect of the invention may be achieved in different ways, however preferably involving the use of one or more master-batches including said one or more colouring agents (C) other than a black pigment or dye, and/or said carbon black (D). Each master-batch is preferably based on the thermoplastic polymer phase (B) but may also include a certain amount of the cellulose and/or lignin based component (A). The number of steps to be used in such a process, i.e. the number of master-batches to be combined step by step, depends upon factors such as the average particle size of each ingredient, the monodispersity or polydispersity of the particle size distribution of each ingredient, the miscibility of (C) or (D) into the thermoplastic polymer phase (B), and the like. Depending upon the quality grade available for each ingredient, the skilled person in polymer processing will be able to determine the optimum process conditions, including the suitable number of master-batches and process steps.

In a particular embodiment, the process of the invention includes a step of combining a dried cellulose and/or lignin based component (A), e.g. dried wood particles, together with a master-batch comprising :
- the one or more colouring agents (C) and/or carbon black (D), and
- one or more liquid plasticizers (E) for the thermoplastic polymer or copolymer of the polymer phase (B), said one or more liquid plasticizers being able to dissolve or disperse said one or more colouring agents (C) and/or carbon black (D) and being able to be at least partially absorbed by the preferably dried cellulose and/or lignin based component (A), e.g. dried wood particles.

In this embodiment, the master-batch may further comprise a suitable amount of the thermoplastic polymer phase (B). Preferably within this embodiment, the proportions of said thermoplastic polymer phase (B) and of said master-batch comprising said one or more liquid plasticizers (E) and said one or more colouring agents (C) and/or carbon black (D) are such that upon combination of all components, a light-stabilized coloured wood-polymer composite material with substantially uniform distribution of said one or more colouring agents (C) is obtained. The type of distribution of the colouring agents (C) and/or carbon black (D) in the final wood-polymer composite material of the invention may be qualitatively controlled visually and may also be quantitatively be ascertained by analytical techniques known in the art such as, but not limited to, image analysis.

Thus, the combination step of the invention proceeds either by directly combining dried wood particles and a three- or four-components master-batch including the thermoplastic polymer phase (B), the one or more colouring agents (C) and/or carbon black (D) and the one or more liquid plasticizers (E) for the thermoplastic polymer or copolymer of said thermoplastic polymer phase (B), or in two sub-steps of (a) first preparing a two- or three-components master-batch comprising one or more colouring agents (C) and/or carbon black (D) and one or more liquid plasticizers (E), and then (b) combining said two- or three-components master-batch, said dried cellulose and/or lignin based component (A), e.g. dried wood particles, and said thermoplastic polymer phase (B).

As in the previous aspects of the invention, the light-stabilized coloured wood-polymer composite material may comprise one or more biocides such as described above.

The coloured and optionally light-stabilized wood-composite materials of the present invention can be used in a number of applications, *inter alia* to manufacture structural components such as, but not limited to, rails, jambs, stiles, sills, tracks, stop and sash, and non-structural trim elements such as, but not limited to, grid, cove, bead, quarter round and the like, all of them being especially suitable for long-term outdoor use. Thus the invention meets the market requirements for a coloured composite material with substantially the same mechanical characteristics (such as, but not limited to, E-modulus, impact resistance at low temperature, and elongation at break) as the corresponding non-coloured composite materials of the prior art, but with the aesthetic appearance (including uniform distribution of colouring agents) required for modern architecture and without a need for substantial maintenance over time due to improved light stability.

### EXAMPLES 1 to 3

An extruder Fiberex T 58 with a Crammer feeder is used to combine, at an operating temperature of 170°C :
- a first master batch commercially available under the trade name Twinson and comprising carbon black from Polyone dispersed in a 1:1 (weight ratio) mixture of resinous wood (e.g. pinewood) particles with an average particle size from 250 µm to 750 µm and a hard polyvinyl chloride polymer with a K value of 57, and
- a second master batch comprising a pigment other than carbon black, commercially available from BASF (Ludwigshafen, Germany) under the trade name Sicovinyl ; three different colours were tested, as follows : Sicovinyl Brown 27 identified as example 1 in the following table, Sicovinyl Red 41 identified as example 2, and Sicovinyl Red 44 identified as example 3.

The respective proportions of the first and second master batches were such that each pigment present in the second master batch was tested in an amount of 3 % by weight with respect to the total composition and that carbon black present in the first master batch was tested in an amount of 1 % by weight with respect to the total composition.

This composition was extruded at a rotating speed of 18 rpm and a linear speed of 1 m per minute into a structural member with a rectangular hollow shape, with dimensions of 150 mm x 30 mm and with a wall thickness of 5 mm at a length of 1 m to 6 m. Processing did not give rise to any production problem.

Evaluation of the light stability of the extruded structural member over time was effected in accordance with standards EN 513-1 and ISO 7724 by measuring the following colouring parameters, immediately after production and after light exposure (lamp type used: Atlas Xenon Burner Tube 6,500 watt) during the period of time specified in the table below, i.e. after 250 hours, 500 hours, and 1000 hours respectively:
- colour index value along the white-black axis " L ",
- colour index value along the red-green axis " a ", and
- colour index value along the blue-yellow axis " b "

The table below indicates the value δE calculated by the following well known equation : δE = √(δL)² + (δa)² + (δb)² after the respective periods of time. Taking into account the precision of each measurement and its incidence on the calculated value δE, the data obtained show that no significant change of colour occurs after 500 hours exposure to such a lamp.

### EXAMPLES 4 to 6

An extruder Fiberex T 58 with a Crammer feeder is used to combine, at an operating temperature of 170°C :
- a 1:1 (weight ratio) mixture of resinous wood (e.g. pinewood) particles with an average particle size from 250 µm to 750 µm and a hard polyvinyl chloride polymer with a K value of 57, said mixture being commercially available under the trade name " premix Beologic 50/50 ", and
- a master batch comprising carbon black commercially available from Polyone under the trade name RAL 9005 and a pigment other than carbon black, commercially available from Polyone under the trade name RAL 3000 (red pigment identified as example 4 in the following table), RAL 6018 (green pigment identified as example 5), or RAL 5015 (blue pigment identified as example 6).

The respective proportions of the wood/PVC mixture and the master batch were such that carbon black and each pigment present in the master batch were tested in the amounts by weight (calculated on the basis of the total composition) indicated in the table below.

Each composition was extruded at a rotating speed of 18 rpm and a linear speed of 1 m per minute into a structural member with a rectangular hollow shape, with dimensions of 150 mm x 30 mm and with a wall thickness of 5 mm at a length of 1 m to 6 m. Processing did not give rise to any production problem.

Evaluation of the light stability of the extruded structural member over time was effected in accordance with standards EN 513-1 and ISO 7724 by measuring the following colouring parameters, immediately after production and after light exposure (lamp type used: Atlas Xenon Burner Tube 6,500 watt) during the period of time specified in the table below, i.e. after 250 hours and 500 hours respectively:
- colour index value along the white-black axis "L",
- colour index value along the red-green axis "a", and
- colour index value along the blue-yellow axis "b".

The table below indicates the value δE calculated by the following well known equation : δE = √(δL)² + (δa)² + (δb)² after the respective periods of time.

Taking into account the precision of each measurement and its incidence on the calculated value δE, and although the method of incorporation of carbon black and the pigment differs from that used in examples 1 to 3, the data obtained show that no significant change of colour occurs after 500 hours exposure to such a lamp.

**TABLE**

| Example | Carbon black % | Pigment % | δE 250 h | δE 500 h | δE 1000 h |
|---|---|---|---|---|---|
| 1 | 1 | 3 | 1.19 | 1.04 | ND |
| 2 | 1 | 3 | 1.07 | 1.18 | 1.20 |
| 3 | 1 | 3 | 2.21 | 2.49 | 2.89 |
| 4 | 1 | 2.6 | 2.78 | 3.00 | ND |
| 5 | 0.5 | 1.8 | 3.15 | 3.78 | ND |
| 6 | 0.5 | 1.8 | 4.42 | 4.81 | ND |

## Claims

1. A process for making a coloured wood-polymer composite material, comprising a step of drying wood particles until the water content of said wood particles is below 8% by weight, and a step of combining said dried wood particles and a masterbatch comprising at least one thermoplastic polymer or copolymer and one or more additives, said process being **characterised in that** the masterbatch used in said combination step comprises one or more colouring agents and one or more liquid plasticizers for said thermoplastic polymer or copolymer, said one or more liquid plasticizers being able to dissolve or disperse said one or more colouring agents and to be at least partially absorbed by said dried wood particles, the proportions of said thermoplastic polymer or copolymer, said one or more liquid plasticizers and said one or more colouring agents in said masterbatch being such that upon combination of said dried wood particles and said masterbatch a coloured wood-polymer composite material with substantially uniform distribution of said one or more colouring agents is obtained.

2. A process for making a wood-polymer composite material according to claim 1, wherein said wood particles are dried until their water content is below 0.1 % by weight.

3. A process for making a wood-polymer composite material according to claim 1 or claim 2, wherein said thermoplastic polymer or copolymer comprises polyvinyl chloride.

4. A process for making a wood-polymer composite material according to claim 3, wherein said polyvinyl chloride further comprises an impact modifier.

5. A process for making a wood-polymer composite material according to claim 4, wherein said impact modifier is based on polymethylmethacrylate or an acrylic copolymer.

6. A process for making a wood-polymer composite material according to any of claims 1 to 5, wherein said one or more liquid plasticizers for said thermoplastic polymer or copolymer are selected from the group consisting of dialkyl phthalates.

7. A process for making a wood-polymer composite material according to any of claims 1 to 6, wherein said one or more colouring agents are selected from the group consisting of inorganic pigments and organic dyes with substantial UV-light stability.

8. A process for making a wood-polymer composite material according to any of claims 1 to 7, wherein said wood particles are selected from the group consisting of wood dust with an average particle size from 25 µm to 250 µm, wood flower with an average particle size from 250 µm to 750 µm, and wood chips with an average particle size from 750 µm to 2.0 mm.

9. A process for making a wood-polymer composite material according to any of claims 1 to 8, wherein said masterbatch further comprises one or more UV light stabilizers.

10. A process for making a wood-polymer composite material according to any of claims 1 to 9, wherein combination of said dried wood particles and said masterbatch is effected by means of extrusion at an elevated temperature between 160 °C and 210 °C.

11. A process for making a wood-polymer composite material according to claim 10, wherein said one or more colouring agents are selected so that they are not subject to deterioration during extrusion at said elevated temperature.

12. A process for making a wood-polymer composite material according to any of claims 1 to 11, wherein said masterbatch further comprises carbon black in a proportion such as to provide light stabilization of said wood-polymer composite material.

13. A coloured wood-polymer composite material comprising wood particles, at least one thermoplastic polymer or copolymer and one or more colouring agents, and one or more liquid plasticizers for said thermoplastic polymer or copolymer, said one or more liquid plasticizers being able to dissolve or disperse said one or more colouring agents and to be at least partially absorbed by said wood particles, the proportions of said thermoplastic polymer or copolymer, said one or more liquid plasticizers and said one or more colouring agents being such that said coloured wood-polymer composite material exhibits a substantially uniform distribution of said one or more colouring agents.

14. A coloured wood-polymer composite material according to claim 13, being made by a process according to any of claims 1 to 11.

15. A coloured wood-polymer composite material according to claim 13 or claim 14, wherein the amount of said one or more liquid plasticizers is from 1.5 to 5 % by weight of the amount of said thermoplastic polymer or copolymer.

16. A coloured wood-polymer composite material according to any of claims 13 to 15, wherein said thermoplastic polymer or copolymer comprises polyvinyl chloride.

17. A coloured wood-polymer composite material according to any of claims 13 to 16, wherein said thermoplastic polymer or copolymer comprises polyvinyl chloride and wherein said polyvinyl chloride further includes an impact modifier.

18. A coloured wood-polymer composite material according to claim 17, wherein said impact modifier is based on polymethylmethacrylate or an acrylic copolymer.

19. A coloured wood-polymer composite material according to any of claims 13 to 18, wherein said one or more plasticizers for said thermoplastic polymer or copolymer are selected from the group consisting of dialkyl phthalates.

20. A coloured wood-polymer composite material according to any of claims 13 to 19, wherein said one or more colouring agents are selected from the group consisting of inorganic pigments and organic dyes.

21. A coloured wood-polymer composite material according to any of claims 13 to 20, wherein the amount of said one or more colouring agents is from 0.1 % to 5 % by weight of the wood-polymer composite material.

22. A coloured wood-polymer composite material according to any of claims 13 to 21, wherein wood particles represent from 30 % to 60 % by weight of said coloured wood-polymer composite material.

23. A coloured wood-polymer composite material according to any of claims 13 to 22, further comprising carbon black in a proportion such as to provide light stabilization of said colored wood-polymer composite material.

24. A coloured wood-polymer composite material according to claim 23, wherein the amount of carbon black ranges from 0.15 % to 2.5 % by weight of the light-stabilized colored wood-polymer composite material.

25. A masterbatch for making a coloured wood-polymer composite material based on a thermoplastic polymer or copolymer and on wood particles, said masterbatch comprising one or more colouring agents, **characterized in that** said masterbatch further comprises one or more liquid plasticizers for said thermoplastic polymer or copolymer, said one or more liquid plasticizers being able to dissolve or disperse said one or more colouring agents and to be at least partially absorbed by said wood particles.

26. A masterbatch according to claim 25, further comprising a thermoplastic polymer or copolymer, and the proportions of said thermoplastic polymer or copolymer, said one or more liquid plasticizers and said one or more colouring agents in said masterbatch being such that upon combination of wood particles and said masterbatch a coloured wood-polymer composite material with substantially uniform distribution of said one or more colouring agents is obtained.

27. Use of a masterbatch comprising one or more colouring agents, a thermoplastic polymer or copolymer and one or more liquid plasticizers for said thermoplastic polymer or copolymer, said one or more liquid plasticizers being able to dissolve or disperse said one or more colouring agents and to be at least partially absorbed by wood particles, for the manufacture of a wood-polymer composite material based on said thermoplastic polymer or copolymer and on wood particles.

28. A structural member obtained from a coloured wood-polymer composite material according to any of claims 13 to 24 or by performing a process according to any of claims 1 to 12.
